# EUROPÄISCHE PATENTSCHRIFT

(11) **EP 1 339 638 B1**
(45) Veröffentlichungstag und Bekanntmachung des Hinweises auf die Patenterteilung: **11.08.2004**
(21) Anmeldenummer: 01999529.9
(22) Anmeldetag: 07.11.2001
(51) Int. Cl.: C01B 33/027, B01J 19/02, H01L 31/18

(54) **VERFAHREN ZUR HERSTELLUNG VON HOCHREINEM, GRANULAREM SILIZIUM**
METHOD FOR PRODUCING HIGH-PURITY, GRANULAR SILICON
PROCEDE POUR LA PRODUCTION DE SILICIUM GRANULAIRE DE GRANDE PURETE

(30) Priorität: 06.12.2000 DE 10060469
(43) Veröffentlichungstag der Anmeldung: 03.09.2003
(73) Patentinhaber: SOLARWORLD AKTIENGESELLSCHAFT, 53113 Bonn (DE)
(72) Erfinder: MLECZKO, Leslaw, 44801 Bochum (DE); BUCHHOLZ, Sigurd, 50825 Köln (DE); SCHLÜTER, Oliver, Felix-Karl, 40627 Düsseldorf (DE); TEJERO, EZPELETA, Maria, Pilar, 09599 Freiberg (DE)
(74) Vertreter: Rau, Albrecht
(86) Internationale Anmeldenummer: PCT/EP2001/012846
(87) Internationale Veröffentlichungsnummer: WO 2002/046098

(56) Entgegenhaltungen:
- US-A- 5 041 308
- PATENT ABSTRACTS OF JAPAN vol. 013, no. 021 (C-560), 18. Januar 1989 (1989-01-18) & JP 63 225512 A (MITSUI TOATSU CHEM INC), 20. September 1988 (1988-09-20)
- DATABASE WPI Section Ch, Week 199423 Derwent Publications Ltd., London, GB; Class E36, AN 1994-188674 XP002195308 & JP 06 127915 A (TOA GOSEI CHEM IND LTD), 10. Mai 1994 (1994-05-10)
- DATABASE WPI Section Ch, Week 199423 Derwent Publications Ltd., London, GB; Class E36, AN 1994-188682 XP002195309 & JP 06 127923 A (TOA GOSEI CHEM IND LTD), 10. Mai 1994 (1994-05-10)
- PATENT ABSTRACTS OF JAPAN vol. 013, no. 021 (C-560), 18. Januar 1989 (1989-01-18) & JP 63 225515 A (MITSUI TOATSU CHEM INC), 20. September 1988 (1988-09-20)

## Beschreibung

Die vorliegende Erfindung betrifft ein Verfahren zur Herstellung von hochreinem, granularem Silizium durch Zersetzung eines siliziumhaltigen Gases. Weiterhin betrifft die Erfindung eine Vorrichtung zur Durchführung dieses Verfahrens und die Verwendung der Vorrichtung.

Unter siliziumhaltigen Gasen werden Siliziumverbindungen oder Gemische von Siliziumverbindungen verstanden, die sich unter den erfindungsgemäßen Bedingungen aus der Gasphase unter Abscheidung von Silizium zersetzen lassen. Siliziumfreie Gase im Sinne dieser Erfindung sind solche Gase, die keine Siliziumverbindungen enthalten.

Für Anwendungen auf dem Gebiet der Photovoltaik und zur Herstellung von elektronischen Bauteilen wird Silizium eines besonders hohen Reinheitsgrades benötigt.

Zur Gewinnung solchen Siliziums sind Verfahren zur thermischen Zersetzung von flüchtigen Siliziumverbindungen bekannt Solche thermischen Zersetzungen können beispielsweise in Wirbelbettreaktoren durchgeführt werden, in denen kleine Siliziumpartikel vorgelegt und diese durch Einströmen eines geeigneten siliziumhaltigen Gases oder Gasgemisches fluidisiert werden, wobei das Gasgemisch neben siliziumhaltigen auch siliziumfreie Gase enthalten kann.

Um Silizium des gewünschten hohen Reinheitsgrades zu erhalten, muss verhindert werden, dass Bestandteile aus dem Reaktormantel des verwendeten Reaktors in den Reaktionsraum und damit in das gewonnene Silizium gelangen.

Aus diesem Grund werden die verwendeten Reaktoren in der Regel mit einem Inliner (eingeschobenes Reaktionsrohr) aus inertem oder reinem Material versehen oder innenseitig beschichtet, insbesondere mit einer Silizium- oder Siliziumcarbidschicht.

So wurde vorgeschlagen, bei der thermischen Zersetzung von Monosilan zu polykristallinem Silizium in einem Reaktor zu arbeiten, dessen innere Oberfläche bis zu einer Tiefe von 20 µm einen Gehalt von Verunreinigungen von maximal 300 ppm aufweist, wobei jedes einzelne verunreinigende Element in dieser Schicht maximal in einer Konzentration von 100 ppm vorhanden ist (Chemical Abstracts CA, Nr. 112 663s, 1994). An anderer Stelle wird sogar nur ein Gehalt von Verunreinigungen von maximal 10 ppm in der inneren Oberfläche des Reaktors bis zu einer Tiefe von 20 µm zugelassen (Chemical Abstracts CA, Nr. 112 662r, 1994).

Aus DE 38 39 705 A1 ist bekannt, Reaktoren mit einer inerten Auskleidung, d.h. mit einem Inliner, insbesondere aus Graphit einzusetzen. Die inerte Auskleidung dient einerseits der Verminderung der Kontaminierung des Siliziums und andererseits dem Schutz der Heizvorrichtung, die im Reaktorinneren angebracht ist, vor dem Kontakt mit den Reaktanten im Reaktionsraum. Es wird darauf hingewiesen, dass es bei Verwendung inerter Auskleidungen möglich ist, dass die Reaktionszone an ihrer Peripherie nicht hermetisch abgeschlossen werden kann, was einen Austritt von Reaktanten aus der Reaktionszone zur Folge haben kann. Um dieses Problem zu vermeiden, müssen zusätzliche Maßnahmen getroffen werden, beispielsweise das Einstellen eines Druckgefälles von der Reaktorwand hin zum Reaktionsraum. Dies erhöht den apparativen Aufwand beträchtlich.

Bei der Verwendung von Inlinern ist also mit einem wesentlich erhöhten Konstruktionsaufwand, insbesondere zur Abdichtung des Inliners zu rechnen. Weiter besteht die Gefahr, dass aufgrund unterschiedlicher thermischer Ausdehnungskoeffizienten der Inliner durch das darauf während des Prozesses abgeschiedene Silizium beschädigt wird.

Ohne Inliner können beispielsweise Reaktoren aus Graphit oder Quarzglas betrieben werden. Die Verwendung solcher Reaktoren ist für die großtechnische Herstellung von hochreinem, granularem Silizium durch Zersetzung eines siliziumhaltigen Gases jedoch dadurch nachteilig, dass die mögliche Reaktorgröße durch die jeweiligen Materialeigenschaften stark limitiert ist. Die Gasdichtheit von Graphit kann darüber hinaus nur mit entsprechenden Beschichtungen erreicht werden.

Diese Probleme treten bei Reaktoren aus metallischen Werkstoffen nicht auf. Für Reaktoren aus metallischen Werkstoffen, wie z.B. Edelstahl, wird in der Literatur jedoch beschrieben, dass es aufgrund der Diffusion von Fremdmetallen zu einem Übergang von Verunreinigungen auf das Material im Reaktor kommt. In einem Bericht der Jet-Propulsion Laboratory (DOE/JPL-1012-123; N.K. Rohtagi, 1986, S. 16-17) beispielsweise wird beschrieben, dass die stärkste Kontamination und damit der stärkste Übertrag von Verunreinigungen auf das hergestellte Silizium im heißen Reaktor stattfindet.

Die Aufgabe der vorliegenden Erfindung bestand nun darin, ein Verfahren zur Herstellung von hochreinem, granularem Silizium durch Zersetzung eines siliziumhaltigen Gases zur Verfügung zu stellen, dass in einem Reaktor aus einem metallischen Werkstoff durchgeführt werden kann, wobei es nicht zur Verunreinigung des hergestellten Siliziums durch Bestandteile des Reaktorwerkstoffs kommt.

Gegenstand der Erfindung ist ein Verfahren zur Herstellung von hochreinem, granularem Silizium durch Zersetzung eines siliziumhaltigen Gases in einem Reaktor aus einem metallischen Werkstoff, dadurch gekennzeichnet, dass der Reaktor auf der Produkt-zugewandten Seite mit einer aus Silizium bestehenden Schutzschicht versehen ist, deren Oberfläche während der Zersetzung des siliziumhaltigen Gases ständig erneuert wird.

Es scheidet sich bei der Durchführung des erfindungsgemäßen Verfahrens im eingesetzten Reaktor aus einem metallischen Werkstoff während der thermischen Zersetzung eines siliziumhaltigen Gases zu Silizium eine Siliziumschicht auf der inneren Reaktorwand ab, wobei die an der Reaktorwand gelegene Seite der Silizium-Schicht zwar Verunreinigungen durch die Diffusion von Fremdatomen aus der Reaktorwand in das Silizium aufweist, die dem Produkt zugewandte Seite der Silizium-Schicht jedoch überraschenderweise keine Verunreinigung an der Oberfläche zeigt. Es kommt also trotz Verwendung metallischer Werkstoffe zu keiner Verunreinigung des im Reaktorinneren hergestellten Siliziums. Weiter wurde gefunden, dass es während der Ausbildung der Silizium-Schicht nicht zu einer Beschädigung des verwendeten Reaktormaterials kommt.

Das erfindungsgemäße Verfahren kann in verschiedenen Reaktortypen durchgeführt werden, solange sich im Reaktor erfindungsgemäß eine schützende Siliziumschicht auf der Produktseite des Reaktors bildet. Geeignete Reaktoren, insbesondere Wirbelbettreaktoren sind bereits bekannt. Bevorzugt ist die Verwendung eines Wirbelbettreaktors. Beispielhaft seien hier Reaktoren mit einem blasenbildenden oder zirkulierendem Wirbelbett genannt, des Weiteren Sprudelbett-, Wanderbett- und Fallrohrreaktoren.

Das Verfahren lässt sich beispielsweise kontinuierlich oder diskontinuierlich durchführen. Bevorzugt ist die kontinuierliche Vorgehensweise.

Die Reaktorabmessungen sind in breiten Grenzen variierbar, da der zu verwendende metallische Werkstoff (z.B. Edelstahl), im Gegensatz zu Werkstoffen wie beispielsweise Graphit oder Quarzglas keine Beschränkungen in der Verfügbarkeit aufweist und sich überdies durch seine besondere Stabilität auszeichnet. So können die Abmessungen optimal auf die gewünschten Reaktionsbedingungen abgestimmt werden. Das erfindungsgemäße Verfahren lässt sich so beispielsweise bei einer Temperatur von 650°C und einem Druck von etwa 1100 mbar problemlos in einem zylindrischen Reaktor aus temperaturbeständigen metallischen Werkstoffen mit einem Durchmesser von etwa 2000 mm und einer Wandstärke von etwa 15-20 mm durchführen. Solche Reaktordurchmesser lassen sich beispielsweise bei Verwendung von Reaktoren aus Quarz oder Graphit nicht realisieren.

Geeignete metallische Werkstoffe sind temperaturbeständige metallische Werkstoffe und Legierungen, beispielsweise Stähle. Die Werkstoffauswahl wird über die Temperatur, die Beständigkeit des Werkstoffes gegenüber den Reaktionsmedien (insbesondere H₂ bei hohen Temperaturen) und die zu realisierende Druckstufe bestimmt. Vorzugsweise werden austenitische Stähle eingesetzt, wie z.B. 1.4981, 1.4961 oder hochwarmfeste Cr-Ni-Stähle, insbesondere bevorzugt Alloy 800 H.

Es ist auch möglich, einen Reaktor einzusetzen, der nicht vollständig aus einem der genannten metallischen Werkstoffen besteht, sondern einen Druck- und/oder temperaturbeständigen Behälter umfasst, der mit dem metallischen Werkstoff ausgekleidet ist.

Darüber hinaus ist es auch möglich, dass der metallische Reaktor im Inneren mit einer keramischen bzw. oxidischen Schicht ausgekleidet ist, die als Diffusionsbarriere gegenüber dem Übergang von Verunreinigungen aus der Reaktorwand in die aus Silizium bestehende Schutzschicht fungiert.

Bevorzugt wird ein metallischer Reaktor eingesetzt, der vollständig aus einem der genannten metallischen Werkstoffen besteht.

Erfindungsgemäß wird die Zersetzung eines siliziumhaltigen Gases zu kristallinem Silizium in einem Reaktor durchgeführt, der auf der Produkt-zugewandten Seite mit einer aus Silizium bestehenden Schutzschicht versehen ist, deren Oberfläche während der Zersetzung des siliziumhaltigen Gases ständig erneuert wird. Die Beschichtung der Produkt-zugewandten Seite des Reaktors mit der Silizium-Schutzschicht kann während der Zersetzung eines siliziumhaltigen Gases zu hochreinem, granularem Silizium erfolgen.

Es ist jedoch auch möglich, die Schutzschicht vor der eigentlichen Umsetzung eines siliziumhaltigen Gases zu hochreinem, granularem Silizium, etwa während der Anfahrphase des Reaktors aufzubringen. Dazu wird beispielsweise im leeren Reaktor ein siliziumhaltiges Gas thermisch zersetzt, wobei die Reaktorwand auf eine Temperatur gebracht wird, die die Zersetzung des siliziumhaltigen Gases und damit die Abscheidung von Silizium an der Reaktorwand zur Folge hat. Die Temperatur ist abhängig vom eingesetzten siliziumhaltigen Gas und kann beispielsweise im Temperaturbereich von 300°C bis 1400°C variiert werden. Sie muss jedoch so hoch sein, dass die Zersetzung des siliziumhaltigen Gases gewährleistet ist und darf die Schmelztemperatur des hergestellten Siliziums nicht überschreiten. Bei Verwendung von SiH₄ als siliziumhaltigem Gas liegt der vorteilhafte Temperaturbereich zwischen 500°C und 1400°C. Bevorzugt ist eine Zersetzungstemperatur von 600°C bis 1000°C, besonders bevorzugt 620°C bis 800°C. Bei Verwendung von SiI₄ liegt der entsprechende Bereich zwischen 850°C und 1250°C, bei anderen Halosilanen zwischen 500°C und 1400°C.

Bevorzugt wird die Silizium-Schutzschicht erst während der Zersetzung eines siliziumhaltigen Gases zu multikristallinem Silizium aufgebaut.

Das erfindungsgemäße Verfahren wird so durchgeführt, dass die Oberfläche der Silizium-Schutzschicht während der Zersetzung des siliziumhaltigen Gases ständig erneuert wird.

Dazu kann beispielsweise so vorgegangen werden, dass eine Menge an Keimpartikeln im Reaktor vorgelegt wird und der Reaktor bei einer Temperatur betrieben wird, bei der die Zersetzung des siliziumhaltigen Gases abläuft. Wird nun das siliziumhaltige Gas zur Zersetzung in den Reaktor eingebracht, setzt sich das durch Zersetzung gebildete Silizium auf den Keimpartikeln und der inneren Reaktorwand ab. Beim Durchführen dieser Zersetzungsreaktion setzt sich so immer wieder Silizium auf der Siliziumschicht auf der inneren Reaktorwand ab und bildet auf diese Weise die sich ständig erneuernde Siliziumschutzschicht. Es ist aber auch denkbar, dass die Innenwand eines Reaktors bei einer Temperatur oberhalb der Zersetzungstemperatur des verwendeten siliziumhaltigen Gases zunächst dadurch mit einer ersten Siliziumschicht überzogen wird, dass ein siliziumhaltiges Gas eingeleitet wird, wobei sich gebildetes Silizium auf der Wand absetzt. In den so vorbehandelten Reaktor werden dann die Keimpartikel (ohne Abkühlung des Reaktors) gegeben und die Zersetzungsreaktion wie oben beschrieben durchgeführt, wobei sich die Siliziumschicht ständig erneuert.

Die Abreaktionsgeschwindigkeit, d.h. die Abscheidegeschwindigkeit von Silizium auf der Reaktorwand muss dabei so geführt werden, dass die Siliziumschicht schneller aufwächst als Verunreinigungen in kritischer Konzentration durch und an die Oberfläche dieser Schicht diffundieren.

Die Einstellung der benötigten Abreaktionsgeschwindigkeit kann beispielsweise dadurch erfolgen, dass die Konzentration an siliziumhaltigem Gas im Gas, das dem Reaktor zugeführt wird, hoch ist, vorzugsweise > 5 Vol.-%, besonders bevorzugt > 15 Vol.-%, und/oder dass die Temperatur der Reaktorwand höher liegt, als die Temperatur im Reaktorinneren, bevorzugt 2-200°C höher, besonders bevorzugt 5-80°C höher.

Als siliziumhaltiges Gas können im erfindungsgemäßen Verfahren beispielsweise Silane, Siliziumiodide und Halosilane des Chlors, Broms und Iods eingesetzt werden. Es können auch Gemische der genannten Verbindungen verwendet werden. Dabei ist es unerheblich, ob die Siliziumverbindung bei Raumtemperatur bereits gasförmig ist oder zunächst in den Gaszustand überführt werden muss. Die Überführung in den Gaszustand kann beispielsweise thermisch erfolgen. Bevorzugt werden Silane eingesetzt Beispielhaft seien SiH₄, Si₂H₆, Si₃H₈, Si₄H₁₀ und Si₆H₁₄ genannt. Besonders bevorzugt ist SiH₄.

Der Druck, bei dem das erfindungsgemäße Verfahren durchgeführt wird, ist weitgehend unkritisch. Es ist jedoch vorteilhaft, bei Drucken von 50 bis 50000 mbar, bevorzugt 100 bis 10000 mbar, besonders bevorzugt 200 bis 6000 mbar zu arbeiten. Alle angegebenen Druckwerte sind absolute Druckwerte. Wird das erfindungsgemäße Verfahren in einem Wirbelbettreaktor durchgeführt, ist unter dem genannten Druck der Druck zu verstehen, der, in Strömungsrichtung des zugeführten Gasstroms gesehen, hinter der Wirbelschicht herrscht.

Es ist möglich, das erfindungsgemäße Verfahren zur Herstellung hochreinen, granularen Siliziums unter Zugabe eines siliziumfreien Gases oder einer Mischung mehrerer siliziumfreier Gase durchzuführen. Beispielsweise kann die zugesetzte Menge an siliziumfreiem Gas 0 bis 98 Vol-%, bezogen auf das insgesamt zugeführte Gas betragen. Der Zusatz des siliziumfreien Gases und oder der Mischung aus siliziumfreiem Gas beeinflusst die Bildung von Siliziumstaub bei der thermischen Zersetzung des siliziumhaltigen Gases. Es ist jedoch auch möglich, auf den Zusatz eines siliziumfreien Gases zu verzichten.

Geeignete siliziumfreie Gase sind beispielsweise die Edelgase, Stickstoff und Wasserstoff, wobei die siliziumfreien Gase einzeln oder in beliebiger Kombination eingesetzt werden können. Bevorzugt sind Stickstoff und Wasserstoff, besonders bevorzugt ist Wasserstoff.

Die Temperatur kann im Temperaturbereich von 300°C bis 1 400°C variiert werden. Sie muss jedoch so hoch sein, dass die Zersetzung des siliziumhaltigen Gases gewährleistet ist und darf die Schmelztemperatur des hergestellten Siliziums nicht überschreiten. Bei Verwendung von SiH₄ liegt der vorteilhafte Temperaturbereich zwischen 500°C und 1400°C. Bevorzugt ist eine Zersetzungstemperatur von 600°C bis 1000°C, besonders bevorzugt 620°C bis 800°C. Bei Verwendung von SiI₄ liegt der entsprechende Bereich zwischen 850°C und 1250°C, bei Halosilanen zwischen 500°C und 1400°C.

Der Austrag des gebildeten hochreinen, granularen Siliziums aus dem verwendeten Reaktor kann beispielsweise kontinuierlich oder absatzweise erfolgen.

In einer bevorzugten Ausführungsform des erfindungsgemäßen Verfahrens werden in einem Wirbelbettreaktor im Reaktionsraum Feststoffpartikel, im Weiteren Partikel genannt, vorgelegt. Die Partikel können absatzweise oder auch kontinuierlich von außen zugeführt werden. Als Partikel können jedoch auch solche Partikel Verwendung finden, die im Reaktionsraum generiert werden. Die Partikel bilden ein Festbett, durch das das zugeführte Gas von unten eingeströmt wird. Die Einströmgeschwindigkeit des zugeführten Gases wird so eingestellt, dass das Festbett fluidisiert wird und sich eine Wirbelschicht ausbildet. Die entsprechende Vorgehensweise ist dem Fachmann an und für sich bekannt. Die Einströmgeschwindigkeit des zugeführten Gases muss mindestens der Lockerungsgeschwindigkeit entsprechen. Unter Lockerungsgeschwindigkeit wird dabei die Geschwindigkeit verstanden, mit der ein Gas durch ein Bett aus Partikeln strömt und unterhalb derer das Festbett erhalten bleibt, d.h. unterhalb derer die Bettpartikel weitgehend unbewegt bleiben. Oberhalb dieser Geschwindigkeit beginnt die Fluidisierung des Betts, d.h. die Bettpartikel bewegen sich und es bilden sich erste Blasen.

Die Einströmgeschwindigkeit des zugeführten Gases beträgt bei dieser bevorzugten Ausführungsform die ein- bis zehnfache, bevorzugt die eineinhalb- bis siebenfache Lockerungsgeschwindigkeit. Vorteilhaft werden Partikel eingesetzt, die einen Durchmesser von 50 bis 5000 µm aufweisen.

Bei den verwendeten Partikeln handelt es sich vorzugsweise um Siliziumpartikel einer Reinheit, die auch für das hergestellte hochreine, granulare Silizium gewünscht wird.

Das nach dem erfindungsgemäßen Verfahren hergestellte Silizium kann vielfältige Verwendung finden. Beispielsweise seien die Verwendung des hergestellten Siliziums in der Photovoltaik oder zur Herstellung von elektronischen Bauteilen genannt.

Gegenstand der Erfindung ist überdies ein Reaktor aus einem metallischen Werkstoff, der dadurch gekennzeichnet ist, dass der Reaktor im Inneren mit einer aus Silizium bestehenden Schutzschicht versehen ist, deren Oberfläche sich während des Betriebes des Reaktors ständig erneuert.

Vorzugsweise handelt es sich beim erfindungsgemäßen Reaktor um einen Wirbelbettreaktor.

Die Reaktorabmessungen sind in breiten Grenzen variierbar, da der zu verwendende metallische Werkstoff (z.B. Edelstahl), im Gegensatz zu Werkstoffen wie beispielsweise Graphit oder Quarzglas keine Beschränkungen in der Verfügbarkeit aufweist und sich durch hohe Stabilität auszeichnet. So können die Abmessungen optimal auf die gewünschten Reaktionsbedingungen abgestimmt werden.

Beispielsweise weist der Reaktor eine zylindrische Form auf, wobei der Durchmesser des Zylinders von 25 mm bis 4000 mm, vorzugsweise 100 mm bis 3000 mm beträgt. Die Werkstoffauswahl und die Wandstärke ergibt sich hierbei aus dem verwendeten Temperatur- und Druckbereich.

Die Höhe des Reaktors beträgt beispielsweise von 0,1 m bis 20 m, bevorzugt von 0,5 m bis 15 m.

Geeignete metallische Werkstoffe sind diejenigen, die bereits bei der Beschreibung des erfindungsgemäßen Verfahrens angeführt wurden. Der maximal zu tolerierende Gehalt an Verunreinigungen im Reaktormaterial kann deutlich über dem maximal zu tolerierenden Gehalt an Verunreinigungen in dem herzustellenden Produkt liegen, da die Schutzschicht im Reaktorinneren eine Übertragung der Verunreinigungen von Reaktormaterial auf Produkt verhindert.

Die aus Silizium bestehende Schutzschicht im Reaktorinneren kann beispielsweise durch Zersetzung eines siliziumhaltigen Gases zu kristallinem Silizium in dem Reaktor aufgebracht werden.

Bevorzugt wird der erfindungsgemäße Reaktor in einem Verfahren zur Herstellung von hochreinem, granularem Silizium durch Zersetzung eines siliziumhaltigen Gases eingesetzt, wobei auch andere Anwendungsmöglichkeiten denkbar sind.

Gegenstand der Erfindung ist demnach weiterhin die Verwendung des erfindungsgemäßen Reaktors zur Durchführung eines Verfahrens zur Herstellung von hochreinem, granularem Silizium durch Zersetzung eines siliziumhaltigen Gases.

### Beispiel 1

In einem Wirbelbettreaktor aus temperaturbeständigem Stahl 1.4959 (Durchmesser = 52,4 mm, Höhe mit expandiertem Kopf = 1600 mm) wurden 800 g Siliziumpartikeln mit einem mittleren Durchmesser von 346 µm (Partikeldurchmesser Dp = 250 - 400 µm) vorgelegt. Es wurde bei einem Druck von 500 mbar am Kopf des Reaktors gearbeitet. Nach dem Anfahren und Aufheizen des Wirbelbettes auf eine Temperatur von 680°C in Stickstoff, wurde die Silankonzentration (SiH₄) am Eingang des Reaktors von 0 auf 100 Vol-% bezogen auf das Fluidisierungsgas Stickstoff eingestellt. Dann wurde ein Anteil von 30 Vol.-% Wasserstoff (H₂) bezogen auf Silan (SiH₄) eingestellt. Das Silan zersetzte sich zu Silizium, das auf den Siliziumpartikeln und der Reaktorinnenwand abgeschieden wurde. Nach insgesamt 120 min (40 min Einstellen der beschrieben Konzentrationen und 80 min stationärer Betrieb) wurden die Partikeln, die durch die Abscheidung von Silan (SiH₄) im mittleren Durchmesser von 346 auf 378 µm angewachsen waren, nach Abkühlen der Partikel, aus dem Reaktor entfernt. Während der Reaktion hat sich an der Reaktorinnenwand eine Silizium-Schicht gebildet. Insgesamt wurden 466 1 (Normalbedingungen) Silan während des Versuches umgesetzt, wovon sich 2,1 % in Form von Silizium auf der Reaktorwand ablagerten. Die Dicke der abgelagerten Schicht wurde anhand repräsentativer Proben mit 190 ± 49 µm bestimmt.

Um die Eigenschaften und die Reinheit der während der Reaktion gebildeten Siliziumschicht auf der inneren Reaktorwand untersuchen zu können, wurden Teile der Silizium-Schicht aus dem Reaktor entfernt und mit Hilfe von Elektronenmikroskopie und Energiedisperser Röngtenspektroskopie (EDX) untersucht. Die Untersuchung mittels Elektronenmikroskopie zeigte, dass eine dichte Schicht des Siliziums auf der Reaktorwand aufwächst.

Die Untersuchungen mittels Energiedisperser Röngtenspektroskopie (EDX) ergaben als Hauptelemente der Verunreinigung Eisen (Fe), Chrom (Cr) und Nickel (Ni), wobei diese Element auf der an der Reaktorwand liegenden Seite der Siliziumschicht detektiert wurden. Es konnten jedoch keine Signale, die durch die Verunreinigungen hervorgerufen werden, auf der Seite der Siliziumschicht detektiert werden, die dem Reaktionsraum zugewandt war.

## Patentansprüche

1. Verfahren zur Herstellung von hochreinem, granularem Silizium durch Zersetzung eines siliziumhaltigen Gases in einem Reaktor aus einem metallischen Werkstoff, **dadurch gekennzeichnet, dass** der Reaktor auf der Produkt-zugewandten Seite mit einer aus Silizium bestehenden Schutzschicht versehen ist, deren Oberfläche während der Zersetzung des siliziumhaltigen Gases ständig erneuert wird.

2. Verfahren nach Anspruch 1, **dadurch gekennzeichnet, dass** die ständige Erneuerung der Oberfläche der aus Silizium bestehenden Schutzschicht durch eine hohe Abscheidegeschwindigkeit von Silizium auf der inneren Reaktorwand erreicht wird, wobei die Siliziumschicht schneller auf der Reaktorwand aufwächst als Verunreinigungen in kritischer Konzentration durch und an die Oberfläche dieser Schicht diffundieren.

3. Verfahren nach wenigstens einem der Ansprüche 1 bis 2, **dadurch gekennzeichnet, dass** die Konzentration an siliziumhaltigem Gas im Gas, das dem Reaktor zugeführt wird, > 5 Vol.-% beträgt und/oder die Temperatur der Reaktorwand höher ist, als die Temperatur im Reaktorinneren.

4. Verfahren nach wenigstens einem der Ansprüche 1 bis 3, **dadurch gekennzeichnet, dass** als metallischer Werkstoff ein austenitischer Stahl oder ein hochwarmfester Cr-Ni-Stahl verwendet wird.

5. Verfahren nach wenigstens einem der Ansprüche 1 bis 4, **dadurch gekennzeichnet, dass** der Reaktor aus einem metallischen Werkstoff einen Druckund/oder temperaturbeständigen Behälter umfasst, der mit dem metallischen Werkstoff ausgekleidet ist.

6. Verfahren nach wenigstens einem der Ansprüch 1 bis 5, **dadurch gekennzeichnet, dass** bei einem Druck von 50 bis 50000 mbar gearbeitet wird.

7. Verfahren nach wenigstens einem der Ansprüch 1 bis 6, **dadurch gekennzeichnet, dass** die Zersetzung eines siliziumhaltigen Gases in Gegenwart von Partikeln durchgeführt wird, die vom zugeführten Gas derart durchströmt werden, dass die Partikeln fluidisiert werden und sich eine Wirbelschicht ausbildet.

8. Verfahren nach Anspruch 7, **dadurch gekennzeichnet, dass** die Partikel einen Durchmesser zwischen 50 und 5000 µm aufweisen.

9. Verfahren nach wenigstens einem der Ansprüche 1 bis 8, **dadurch gekennzeichnet, dass** als siliziumhaltiges Gas ein Silan, bevorzugt SiH₄ verwendet wird.

10. Verfahren nach wenigstens einem der Ansprüche 1 bis 9, **dadurch gekennzeichnet, dass** vor der Herstellung von hochreinem, granularem Silizium im Reaktor auf der Produkt-zugewandten Seite des Reaktors eine erste aus Silizium bestehende Schutzschicht durch Abreaktion eines siliziumhaltigen Gases gebildet wird.

11. Verwendung des gemäß wenigstens eines der Ansprüche 1 bis 10 hergestellten Siliziums in der Photovoltaik.

12. Verwendung des gemäß wenigstens eines der Ansprüche 1 bis 10 hergestellten Siliziums zur Herstellung von elektronischen Bauteilen.

13. Reaktor aus einem metallischen Werkstoff, **dadurch gekennzeichnet, dass** der Reaktor im Inneren mit einer aus Silizium bestehenden Schutzschicht versehen ist, deren Oberfläche sich während des Betriebes des Reaktors ständig erneuert.

14. Verwendung des Reaktors gemäß Anspruch 13 zur Durchführung eines Verfahrens zur Herstellung von hochreinem, granularem Silizium durch Zersetzung eines siliziumhaltigen Gases.

## Claims

1. A method for the manufacture of hyper-pure granular silicon by decomposition of a silicic gas carried out in a reactor made of a metallic material, **characterized in that** the reactor is provided with a protective coating consisting of silicon on the surface facing the product, and that the surface of that coating is permanently renewed during the decomposition of the silicic gas.

2. A method according to Claim 1, **characterized in that** the permanent renewal of the surface of the protective coating consisting of silicon is achieved by a high deposition velocity of silicon on the inner reactor surface, wherein the silicon layer on the reactor surface grows faster than contamination in critical concentration can diffuse through and up to the surface of this layer.

3. A method according to at least one of Claims 1 and 2, **characterized in that** the concentration of silicic gas in the gas that is introduced into the reactor is > 5 volume percent and/or that the temperature of the reactor surface is higher than the temperature in the interior of the reactor.

4. A method according to at least one of Claims 1 to 3, **characterized in that** the metallic material used is austenitic steel or a high-temperature Cr-Ni steel.

5. A method according to at least one of Claims 1 to 4, **characterized in that** the reactor is made of a metallic material and comprises a pressure vessel and/or thermoresistant container the interior of which is coated with the metallic material.

6. A method according to at least one of Claims 1 to 5, **characterized in that** the reaction is carried out at a pressure ranging from 50 to 50000 mbar.

7. A method according to at least one of Claims 1 to 6, **characterized in that** the decomposition of a silicic gas is carried out in the presence of particles through which the introduced gas streams in a way such that the particles are fluidized and a fluidized bed develops.

8. A method according to Claim 7, **characterized in that** the particles have a diameter between 50 and 5000 µm.

9. A method according to at least one of Claims 1 to 8, **characterized in that** the silicic gas used is silane, preferably SiH₄.

10. A method according to at least one of Claims 1 to 9, **characterized in that** prior to the manufacture of hyper-pure granular silicon in the reactor an initial protective coating consisting of silicon is formed on the reactor surface facing the product by reaction of a silicic gas.

11. Use of the silicon produced according to at least one of Claims 1 to 10 in the photovoltaic area.

12. Use of the silicon produced according to at least one of Claims 1 to 10 in the manufacture of electronic components.

13. A reactor made of a metallic material, **characterized in that** the interior of the reactor is provided with a protective layer consisting of silicon the surface of which is permanently renewed during operation of the reactor.

14. Use of the reactor according to Claim 13 for the execution of a method for the manufacture of hyper-pure granular silicon by decomposition of silicic gas.

## Revendications

1. Procédé de fabrication de silicium granulaire de haute pureté par décomposition d'un gaz contenant du silicium dans un réacteur fait d'un matériau métallique, **caractérisé en ce que** le réacteur est pourvu d'un revêtement protecteur composé de silicium sur la surface faisant face au produit, et dont la surface est sans cesse renouvelée au cours de la décomposition du gaz contenant du silicium.

2. Procédé selon la revendication 1, **caractérisé en ce que** le renouvellement permanent de la surface du revêtement protecteur composé de silicium est obtenu par une vitesse de dépôt élevée du silicium sur la surface intérieure du réacteur, dans lequel la couche de silicium sur la surface du réacteur croît plus rapidement que ne peut diffuser la contamination en concentration critique au travers et jusqu'à la surface de cette couche.

3. Procédé selon au moins une des revendications 1 à 2, **caractérisé en ce que** la concentration du gaz contenant du silicium dans le gaz qui est introduit dans le réacteur est supérieure à 5 % en volume et/ou que la température de la surface du réacteur est plus élevée que la température à l'intérieur du réacteur.

4. Procédé selon au moins une des revendications 1 à 3, **caractérisé en ce que** le matériau métallique utilisé est un acier austénitique ou un acier Cr-Ni haute température.

5. Procédé selon au moins une des revendications 1 à 4, **caractérisé en ce que** le réacteur fait d'un matériau métallique comprend une cuve sous pression et/ou une cuve thermorésistante dont l'intérieur est revêtu avec le matériau métallique.

6. Procédé selon au moins une des revendications 1 à 5, **caractérisé en ce que** la réaction est effectuée sous une pression de 50 à 50 000 mbar.

7. Procédé selon au moins une des revendications 1 à 6, **caractérisé en ce que** la décomposition du gaz contenant du silicium est effectuée en présence de particules au travers desquelles le gaz introduit afflue, à tel point que les particules sont fluidisées et forment un lit fluidisé.

8. Procédé selon la revendication 7, **caractérisé en ce que** les particules ont un diamètre entre 50 et 5 000 µm.

9. Procédé selon au moins une des revendications 1 à 8, **caractérisé en ce que** le gaz utilisé, contenant du silicium, est un silane de préférence SiH₄.

10. Procédé selon au moins une des revendications 1 à 9, **caractérisé en ce que** préalablement à la fabrication du silicium granulaire de haute pureté dans le réacteur un revêtement protecteur initial composé de silicium est formé sur la surface du réacteur faisant face au produit par réaction d'un gaz contenant du silicium.

11. Utilisation du silicium produit selon au moins une des revendications 1 à 10 dans la conversion photovoltaïque.

12. Utilisation du silicium produit selon au moins une des revendications 1 à 10 dans la fabrication de composants électroniques.

13. Réacteur fait en un matériau métallique, **caractérisé en ce que** l'intérieur du réacteur est pourvu d'une couche protectrice comprenant du silicium, dont la surface est sans cesse renouvelée au cours du fonctionnement du réacteur.

14. Utilisation du réacteur selon la revendication 13 pour l'exécution d'un procédé de fabrication de silicium granulaire de haute pureté par décomposition d'un gaz contenant du silicium.
